# EUROPEAN PATENT APPLICATION

(11) **EP 2 423 821 A2**
(43) Date of publication of application: **29.02.2012**
(21) Application number: 11178827.9
(22) Date of filing: 25.08.2011
(51) Int. Cl.: G06F 12/08, G06F 15/78, G06F 9/318, G06F 9/38

(54) **Processor, apparatus, and method for fetching instructions and configurations from a shared cache**

(30) Priority: 25.08.2010 KR 20100082694
(71) Applicant: Samsung Electronics Co., Ltd, Gyeonggi-Do 443-742 (KR)
(72) Inventor: Egger, Bernhard, Seoul (KR); Yoo, Dong-Hoon, Seoul (KR)
(74) Representative: Grünecker, Kinkeldey, Stockmair & Schwanhäusser

(57) **Abstract**

An apparatus and method that includes a single memory as a VLIW instruction cache and CGA configuration memory is provided. Data is provided from a storage unit to a processing core that is capable of processing data in a first mode and a second mode. If the processing core is processing in the first mode, a VLIW instruction is output. If the processing core is processing in the second mode, a CGA configuration is output.

## Description

### CROSS-REFERENCE TO RELATED APPLICATION(S)

This application claims the benefit under 35 U.S.C. §119(a) of Korean Patent Application No. 10-2010-0082694, filed on August 25, 2010, in the Korean Intellectual Property Office.

### BACKGROUND

### 1. Field

The following description relates to a reconfigurable array memory.

### 2. Description of the Related Art

Reconfigurable architecture is an architecture that may modify a hardware configuration of a computing device such that the hardware configuration is optimized for processing a predetermined task.

When a task is processed only in a hardware manner, even the slightest change to the task may make the task difficult to process due to the rigidity of hardware. Conversely, when a task is processed only in a software manner, it is possible to process the task by changing the software to be suitable for the task, but the processing speed is lower than when the task is processed using the hardware.

The reconfigurable architecture has the above advantageous characteristics of hardware and software. For example, in a digital signal processing in which iterations of an operation are performed, the reconfigurable architecture is gaining interest. In addition, the reconfigurable architecture has an ability to be optimized for each task being processed. Accordingly, in recent years, a VLIW/CGA mixed processor has appeared. Typically, in the mixed VLIW/CGA processor a general instruction is executed in a very long instruction word (VLIW) mode and a loop operation is executed in a coarse-grained array (CGA) mode.

Conventional VLIW/CGA mixed processors use two types of memories including a cache memory and a configuration memory. Typically the cache memory is used to store instructions in a VLIW mode. The configuration memory is used to store CGA configuration information in a CGA mode. However, the VLIW mode and the CGA mode are exclusive with each other. That is, the processor may only operate in one mode at a time. As a result, one of the cache memory and the configuration memory is not being used during runtime. Because the configuration memory is not used during the VLIW mode and the cache memory is not used during the CGA mode, the memory integration efficiency and the energy use efficiency of the array are reduced.

### SUMMARY

In one general aspect, there is provided a processor including a processing core unit configured to process data in a first operation mode and a second operation mode, a storage unit comprising a plurality of storage spaces each having a plurality of storage lines, and an output interface unit configured to select one of the plurality of storage spaces and output first data corresponding to a storage block on a storage line of the selected storage space if the processing core is in the first operation mode, and configured to select at least two of the plurality of storage spaces and output second data that is obtained by combining a plurality of blocks located on the same storage line of the selected storage spaces.

The processing core unit may be formed using a reconfigurable array and may operates on a very long instruction word (VLIW) architecture in the first mode.

The output interface unit may output a VLIW instruction to be processed using the VLIW architecture, as the first data.

The processing core unit may be formed using a reconfigurable array and may operate in a coarse-grained array (CGA) architecture in the second mode.

The output interface unit may output a CGA instruction to be processed using the CGA architecture as the second data and configuration information that is used to define a configuration of the CGA architecture.

The output interface unit may comprise a mode determination unit configured to determine whether the processing core is in the first mode or the second mode, a first output interface unit configured to output the first data if the processing core unit is in the first mode, and a second output interface unit configured to output the second data if the processing core unit is in the second mode.

In another aspect, there is provided an apparatus for memory management, the apparatus including a storage unit comprising a plurality of storage spaces having a plurality of storage lines, and an output interface unit configured to select one of the plurality of storage spaces during a first mode and output first data corresponding to a storage line of the selected storage space, and to select at least two of the plurality of storage spaces during a second mode and output second data that is obtained by combining a plurality of pieces of data each corresponding to the same storage line of the selected storage spaces.

The output interface unit may comprise a mode determination unit configured to determine whether a processing core unit to process the first data or the second data is in the first mode or the second mode, a first output interface unit configured to output the first data if the processing core unit is in the first mode, and a second output interface unit configured to output the second data if the processing core unit is in the second mode.

In another aspect, there is provided a method for memory management capable of providing a processing core having a first mode and a second mode with data of a storage unit including a plurality of storage spaces having a plurality of storage lines, the method including determining whether the processing core is in the first mode or the second mode, selecting one of the plurality of storage spaces, if the processing core is in the first mode, and outputting first data corresponding to a storage line of the selected storage space, and selecting at least two of the plurality of storage spaces, if the processing core is in the second mode, and outputting second data that is obtained by combining a plurality of pieces of data each corresponding to the same storage line of the selected storage spaces.

The first mode may be a very long instruction word (VLIW) mode of the processing core, and the second mode may be a coarse-grained array (CGA) mode of the processing core.

The first data may comprise a VLIW instruction to be processed during the VLIW mode.

The second data may comprise a CGA instruction to be processed during the CGA mode and CGA configuration information.

In another aspect, there is provided a processor for processing data in a very long instruction word (VLIW) mode and a coarse-grained array (CGA) mode, the processor including a processing core for processing data, and a memory for storing the data and for continuously providing the data to the processing core regardless of whether the processing core is in VLIW mode or in CGA mode.

The memory may operate in a first configuration while the processing core is in the VLIW mode and the memory may operate in a second configuration while the processing core is in the CGA mode.

The first configuration may be an n-way set associative cache memory to provide a VLIW instruction while the processing core is in the VLIW mode.

The second configuration may be a direct-mapped cached configuration memory to provide CGA configuration information while the processing core is in the CGA mode.

While in the first configuration in the VLIW mode, the memory may provide the processing core with first data, and while in the second configuration in the CGA mode, the memory may provide the processing core with second data that is different from the first data.

The second data may be larger in size than the first data.

The memory may comprise a storage unit that comprises a plurality of storage spaces, and each storage space is divided into a plurality of storage lines, and an output interface unit that provides the processing core with different types of data and different amounts of data based on the mode of the processing core.

The storage unit may comprise a plurality of storage banks, each comprising a plurality of indexes that are aligned with the indexes of the other storage banks, in response to the processor being in the first mode, the output interface unit may provide data from one storage bank corresponding to a received index, and in response to the processor being in the second mode, the output interface unit may provide data from each storage bank corresponding to the received index.

Other features and aspects may be apparent from the following detailed description, the drawings, and the claims.

### BRIEF DESCRIPTION OF THE DRAWINGS

FIG. 1 is a diagram illustrating an example of a computing apparatus.
FIG. 2 is a diagram illustrating an example of a processing core.
FIG. 3 is a diagram illustrating an example of an apparatus for memory management.
FIG. 4 is a diagram illustrating an example of an output interface unit.
FIGS. 5A and 5B are diagrams illustrating examples of an operation of an internal memory.
FIG. 6 is a diagram illustrating an example of a method for memory management.

Throughout the drawings and the detailed description, unless otherwise described, the same drawing reference numerals should be understood to refer to the same elements, features, and structures. The relative size and depiction of these elements may be exaggerated for clarity, illustration, and convenience.

### DETAILED DESCRIPTION

The following detailed description is provided to assist the reader in gaining a comprehensive understanding of the methods, apparatuses, and/or systems described herein. Accordingly, various changes, modifications, and equivalents of the methods, apparatuses, and/or systems described herein may be suggested to those of ordinary skill in the art. Also, descriptions of well-known functions and constructions may be omitted for increase clarity and conciseness.

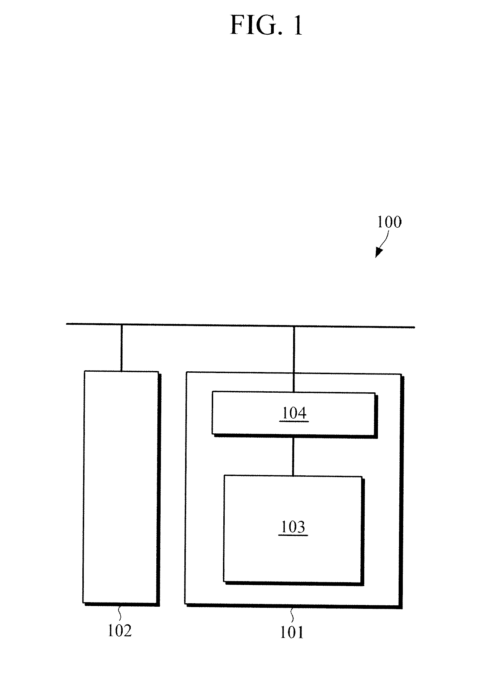

FIG. 1 illustrates an example of a computing apparatus.

Referring to FIG. 1, computing apparatus 100 includes a processor 101 and an external memory 102. The processor 101 includes a processing core 103 and an internal memory 104. The computing apparatus 100 may be or may be included in a terminal, for example, a mobile terminal, a computer, a personal digital assistant (PDA), a camera, an MP3 player, a tablet, a home appliance, a TV, and the like.

The processor 101 processes various types of data. For example, the data to be processed may be fetched from the external memory 102 and stored in the internal memory 104. When processing a predetermined task in the processing core 103 provided in the processor 101, accessing the internal memory 104 is typically faster than accessing the external memory 102. Accordingly, the data to be processed may be fetched and stored in the internal memory 104, thereby bringing about benefits in processing speed.

The processing core 103 may be formed based on a dynamic reconfigurable array. The dynamic reconfigurable array represents a processor in a system configuration that may be dynamically changed. For example, the reconfigurable array may be changed depending on the use or purpose of the processor in a system. For example, the hardware architecture of the processing core 103 may be changed based on the task to be processed by the processor.

For example, the processing core 103 may have a first mode and a second mode that are exclusive with each other. For example, the processing core 103 may only be in one mode at a time. The first mode may be a very long instruction word (VLIW) mode. As an example, the VLIW mode may be suitable for performing a general operation. The second mode may be a coarse-grained array (CGA) mode. As an example, the CGA mode may be suitable for performing a loop operation.

For example, if the processing core 103 is processing general operations in the first mode and encounters a loop operation, the processing core 103 may be converted into the second mode to process the loop operation. After completing the loop operation, the processing core 103 may be converted back into the first mode.

The configuration of the processing core 103 may be optimized for an operation performed at each mode. For example, the processing core 103 at the second mode may process a loop operation by changing its configuration to be optimized to process the loop operation. The internal memory 104 may store data and instructions processed in each mode and configuration information that may be used to define the configuration of the processing core 103.

The internal memory 104 may output data for each mode of the processing core 103. For example, the internal memory 104 may output first data while in the first mode of the processing core 103 and may output second data that is different from the first data while in the second mode of the processing core 103. For example, the first data may be a general instruction while in the VLIW mode and the second data may be a loop instruction and configuration information used to define the CGA configuration while in the CGA mode. As another example, the second data may be a greater amount of data than the first data.

In the example shown in FIG. 1, the internal memory 104 may operate as an instruction cache while the processing core 103 is in the VLIW mode, and may operate as a configuration memory while the processing core 103 is in the CGA mode.

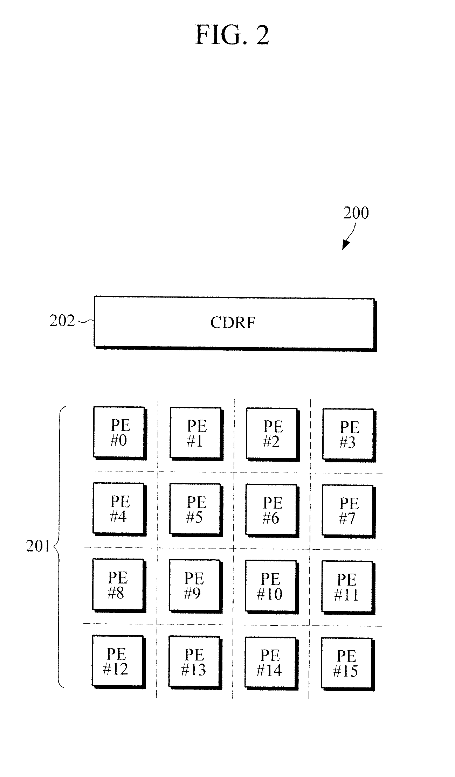

FIG. 2 illustrates an example of a processing core. For example, the processing core may be an example of the processing core 103 shown in FIG. 1.

Referring to FIG. 2, processing core 200 includes a plurality of processing elements 201 and a center data register file 202. The processing elements 201, such as processing elements PE#0 to PE#15, may include a function unit or a function unit and a register file. Each of the processing elements PE#0 to PE#15 may process a task independently of each other.

In this example, the processing core includes sixteen processing elements, however, the processing core is not limited thereto. For example, the processing core may include four processing elements, eight processing elements, sixteen processing elements, thirty two processing elements, and the like.

As an example, less than all of the processing elements may operate as the VLIW processor while in the first mode. For example, processing elements PE#0 to PE#3 disposed in the first row among the processing elements PE#0 to PE#15 may serve as a VLIW processor while in the first mode. In other words, the processing elements PE#0 to PE#3 of the first row may perform general instructions while in the VLIW mode. As another example, additional processing elements sharing a register file may serve as the VLIW processor. In this example, processing elements #0 through #3 serve as the VLIW processing elements, however, the processing core 200 is not limited thereto. For example, processing elements #4 through #7 may serve as the VLIW processing elements, processing elements #0 through #7 may serve as the VLIW processing elements, and the like.

As another example, each of the processing elements PE#0 to PE#15 may serve as a CGA processor while in the second mode. In other words, all processing elements PE#0 to PE#15 may be optimized for a loop operation while in the CGA mode and may perform instructions associated with a loop. As another example, only some of the processing elements may serve as a CGA processor.

The center data register file 202 may temporarily store data during the conversion from VLIW mode to CGA mode or during the conversion from CGA mode to VLIW mode.

For example, the data and instructions used during the VLIW mode may be referred to as the first data, and the data and instructions used during the CGA mode may be referred to as the second data. For example, the first data may be VLIW instructions in the VLIW mode, and the second data may be configuration information defining the connection state among the processing elements 201 and which processing element processes which data while in the CGA mode.

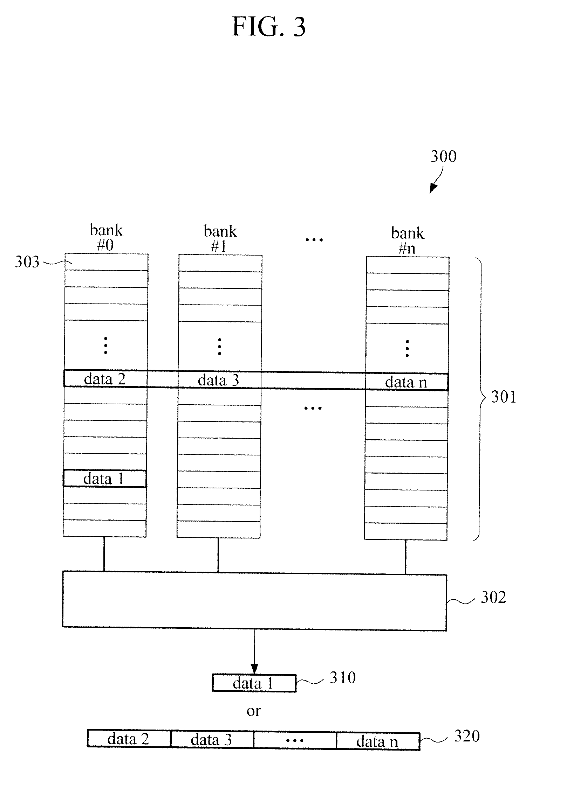

FIG. 3 illustrates an example of an apparatus for memory management. For example, the apparatus may be an example of the internal memory 104 shown in FIG. 1.

Referring to FIG. 3, apparatus for memory management 300 includes a storage unit 301 and an output interface unit 302.

In this example, the storage unit 301 includes a plurality of storage spaces BANK#0 to BANK#N, and each storage space is divided into a plurality of storage lines 303.

The output interface unit 302 provides the processing core 103 (shown in FIG. 1) with different types of data and/or different amounts of data depending on the mode of the processing core 103. For example, if the processing core 103 is in the VLIW mode, the output interface unit 302 may select one storage space BANK#0 of the storage spaces BANK#0 to BANK#N, and may output DATA 1 corresponding to a block of storage on the storage line of the selected storage space BANK#0. As shown in FIG. 3, each storage line includes a plurality of storage blocks. In this example, the number of storage blocks on each storage line corresponds to the number of storage spaces BANK#0 to BANK#N.

As another example, if the processing core 103 is in the CGA mode, the output interface unit 302 may select all storage spaces BANK#0 to BANK#N and may output data obtained by combining a plurality of data DATA 2, DATA 3, ..., DATA N that correspond to storage blocks on the storage line of the selected storage spaces BANK#0 to BANK#N. For example, the first data 310 that is output while in the VLIW mode may be a VLIW instruction and the second data 320 that is output while in the CGA mode may be CGA configuration information.

Selecting of a storage line by the output interface unit 302 may be determined based on an address sent from the processing core 103. As another example, data output while in the first mode may be only a portion of DATA1 corresponding to the block of data on the storage line of the storage space, for example, BANK#1 that is selected by an offset included in the sent address.

As another example, while in the second mode, storage blocks on the storage line of all storage spaces BANK#0 to BANK#N may be selected. As another example, while in the second mode, a storage block on the storage line of one or more storage spaces, for example, BANK#0 to BANK#1, may be selected based on the size of configuration information.

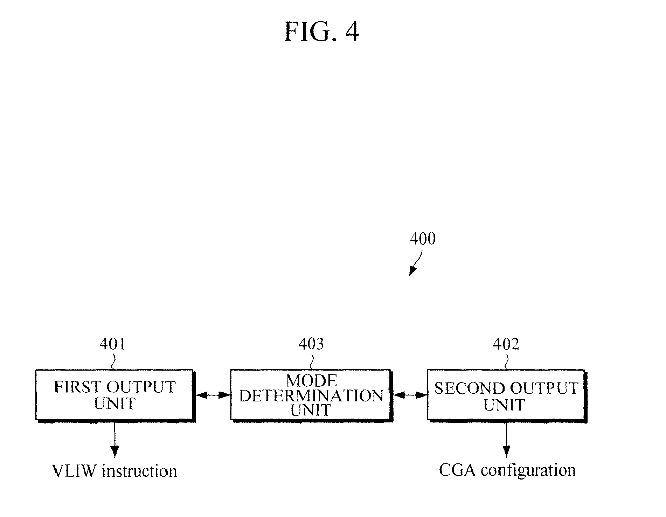

FIG. 4 illustrates an example of an output interface unit. The output interface unit is an example of the output interface unit 302 included in FIG. 3.

Referring to FIG. 4, output interface unit 400 includes a first output unit 401, a second output unit 402, and a mode determination unit 403.

The first output unit 401 may select one of a plurality of storage spaces BANK#0 to BANK#N. The storage space to be selected, for example, BANK#0, may be determined by a tag included in an address sent from the processing core 103 (shown in FIG. 1). The first output unit 401 may select a predetermined storage line in the selected storage space BANK#0. The storage line to be selected may be determined by an index included in an address sent from the processing core 103. The first output unit 401 may output all or some of the data present in a storage block of the selected storage line and may provide the processing core 103 with the output data.

The second output unit 402 may consecutively select one or more storage spaces from among the plurality of storage spaces BANK#0 to BANK#N. For example, the second output unit 402 may select all storage spaces BANK#0 to BANK#N. The second output unit 402 may select a predetermined storage line from the selected storage space 301. The storage line to be selected may be determined by an index included in an address sent from the processing core 103. The second output unit 402 may output data obtained by combining data stored in one or more storage blocks of the selected storage lines and may provide the processing core 103 with the combined data.

The mode determination unit 403 may determine a mode conversion of the processing core 103. For example, the mode determination unit 403 may determine whether the processing core 103 is in a VLIW mode or in a CGA mode. The mode determination unit 403 may activate one of the first output unit 401 and the second output unit 402 based on the result of determination.

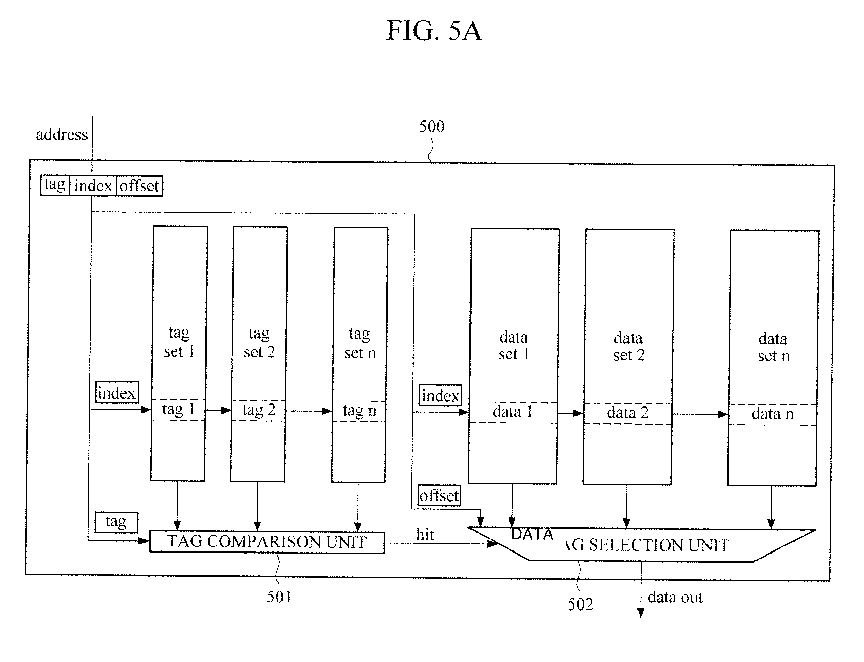

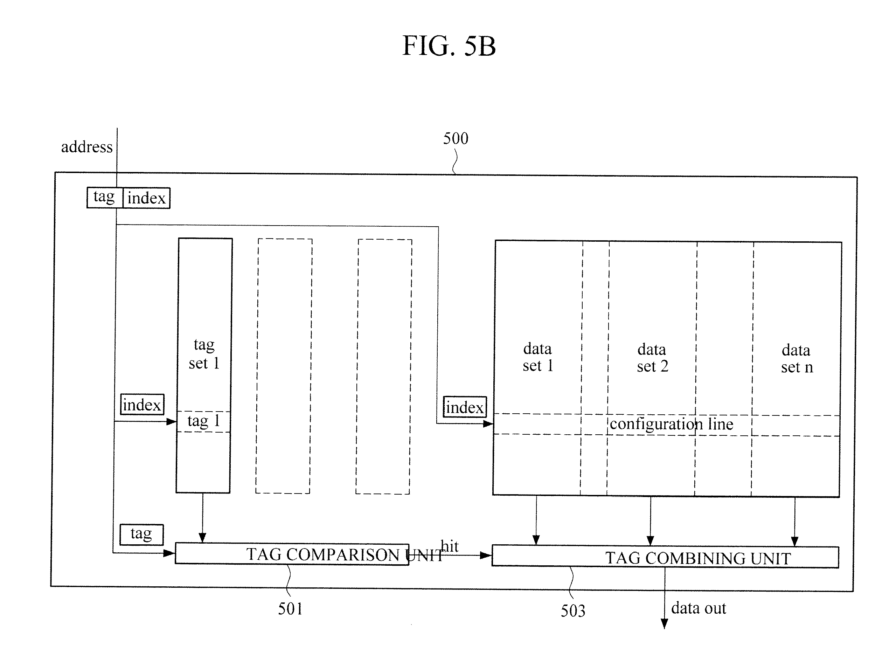

FIGS. 5A and 5B illustrate examples of an operation of an internal memory. The internal memory is an example of the internal memory 104 included in FIG. 1.

As shown in FIG. 5A, internal memory 500 may operate as a set associative cache, for example, an n-way set associative cache to provide a VLIW instruction while the processing core is in a VLIW mode. In this example, "n" may be a natural number such as two, three, four, and the like. For example, in FIG. 5A, in response to an address being received, an index of the address may be sent to each tag set and each data set and a tag of the address may be transferred to a tag comparison unit 501. The tag comparison unit 501 may compare the tag included in the address with a tag identified by the index. If the tag included in the address is the same as the tag identified by the index, the tag comparison unit 501 may transfer the tag to a data selection unit 502.

The data selection unit 502 may select data corresponding to the tag from the data set and may output the selected data. As another example, the data selection unit 502 may output a part of the selected data in consideration of an offset. For example, data output from the data selection unit 502 may include data and instructions to be used while in VLIW mode.

As shown in FIG. 5B, the internal memory 500 may operate as a direct-mapped cached configuration memory to provide CGA configuration information while the processing core is in a CGA mode. For example, in FIG. 5B, in response to an address being received, an index of the address may be sent to a tag set and a data set and a tag of the address may be sent to the tag comparison unit 501.

Different from FIG. 5A, because configuration information of the CGA mode may have a size greater than VLIW instructions, a single tag set may be used without using a plurality of tag sets divided in n-ways and a plurality of data sets may be regarded as a single data set. The tag comparison unit 501 compares the tag included in the address with a tag identified by the index. If the tag included in the address is the same as the tag identified by the index, the tag comparison unit 501 sends the tag to a data combining unit 503. The data combining unit 503 may select data corresponding to the tag in the data set and may output the selected data. In the example of FIG. 5B, a single line of the data set serves as a configuration line and the output data may include data, instruction, and configuration information of hardware architecture that are used in the CGA mode.

In FIG. 5A, the internal memory includes a tag selection unit 502. In FIG. 5B, the internal memory includes a tag combining unit 503. The tag selection unit 502 and the tag combining unit 503 may be the same unit, or they may be separate units.

In the examples of FIGS. 5A and 5B, the set-associative memory consists of two memory parts, the tag memory and the data memory. An address consists of a tag, an index, and an offset.

The tag memory part knows whether a hit or a miss occurs using the combination of a tag and an index. To do this, the tag comparison unit 501 may compare the given tag with tag sets on the given index. If the given tag is matched with a tag in a tag set i for the given index, a hit occurs. In FIG. 5A, an offset may be used to specify the location of datum in a data set when each data set contains several data. So, if the hit occurs, the tag selection unit 502 may select a datum in the given offset from the data set i for the given index.

The structure of the data sets of FIG. 5B is generally the same as FIG. 5A. However, the data sets in FIG. 5B is recognized as a single data set to provide configurations in CGA mode. This is the reason why there is only one tag set in FIG. 5B. In this example, if a hit occurs in the tag comparison unit 501, the tag combining unit 503 may gather all data from each data set on the given index and combine them to form a single data.

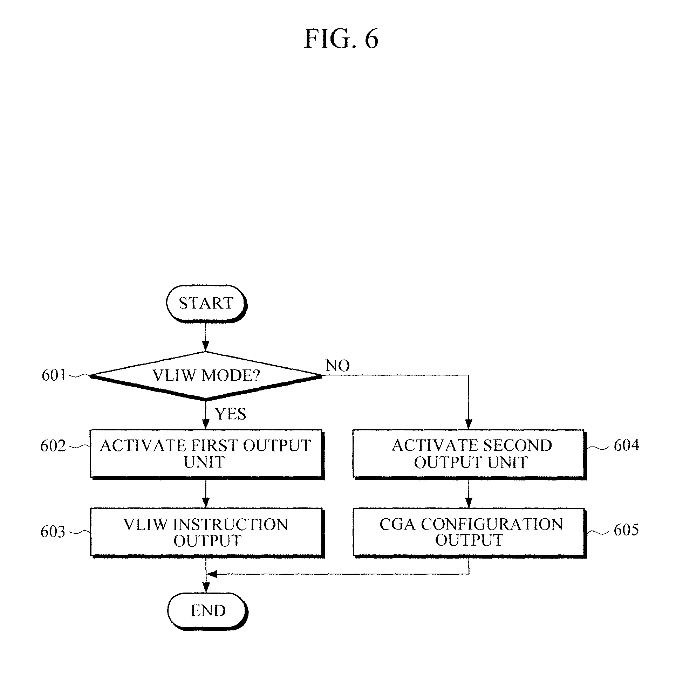

FIG. 6 illustrates an example of a method for memory management.

Referring to FIGS. 1, 3, 4 and 6, a method for memory management is described.

In 601, whether the processing core 103 is in a VLIW mode or in a CGA mode is determined. For example, the mode conversion unit 403 may determine whether a mode conversion occurs in the processing core 103 by detecting a portion of an instruction set to be performed in the processing core 103. The mode conversion unit 403 may detect the point where a mode conversion occurs.

If the processing core 103 is in the VLIW mode, in 602 the first output unit 401 is activated. VLIW instructions are output through the first output unit 401, in 603. For example, the first output unit 401 may select one of the storage spaces BANK#0 to BANK#N and output all or some of data included in a predetermined storage line of the selected storage space, for example, BANK#0.

If the processing core 103 is in the CGA mode, in 604 the second output unit 402 is activated. CGA configuration information is output through the second output unit 402, in 605. For example, the second output unit 402 may select all of the storage space 301 and output data obtained by combining data of storage lines of the selected storage space 301.

According to the apparatus and method described herein, a single memory device provided in the VLIW/CGA mixed processor may be used as an n-way set associative cache and a direct-mapped cached configuration memory based on the state of the processor.

Instead of having a separate memory for the processing unit while in VLIW mode and a separate memory for the processor while in the CGA mode, the following description provides a memory that may remain active in both the VLIW mode and the CGA mode.

Various aspects are directed towards a processor for processing data in a very long instruction word (VLIW) mode and a coarse-grained array (CGA) mode. The processor may comprise a processing core for processing data, and a memory for storing the data and for providing the data to the processing core regardless of whether the processing core is in VLIW mode or in CGA mode.

The memory may operate in a first configuration when the processing core is in the VLIW mode and the memory may operate in a second configuration when the processing core is in the CGA mode. For example, the first configuration may be an n-way set associative cache memory to provide a VLIW instruction while the processing core is in the VLIW mode. As another example, the second configuration may be a direct-mapped cached configuration memory to provide CGA configuration information while the processing core is in the CGA mode.

While in the first configuration in the VLIW mode, the memory may provide the processing core with first data, and while in the second configuration in the CGA mode, the memory may provide the processing core with second data that is different from the first data. The second data may be larger in size than the first data.

Program instructions to perform a method described herein, or one or more operations thereof, may be recorded, stored, or fixed in one or more computer-readable storage media. The program instructions may be implemented by a computer. For example, the computer may cause a processor to execute the program instructions. The media may include, alone or in combination with the program instructions, data files, data structures, and the like. Examples of computer-readable storage media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The program instructions, that is, software, may be distributed over network coupled computer systems so that the software is stored and executed in a distributed fashion. For example, the software and data may be stored by one or more computer readable storage mediums. Also, functional programs, codes, and code segments for accomplishing the example embodiments disclosed herein can be easily construed by programmers skilled in the art to which the embodiments pertain based on and using the flow diagrams and block diagrams of the figures and their corresponding descriptions as provided herein. Also, the described unit to perform an operation or a method may be hardware, software, or some combination of hardware and software. For example, the unit may be a software package running on a computer or the computer on which that software is running.

As a non-exhaustive illustration only, a terminal/device/unit described herein may refer to mobile devices such as a cellular phone, a personal digital assistant (PDA), a digital camera, a portable game console, and an MP3 player, a portable/personal multimedia player (PMP), a handheld e-book, a portable lab-top PC, a global positioning system (GPS) navigation, a tablet, a sensor, and devices such as a desktop PC, a high definition television (HDTV), an optical disc player, a setup box, a home appliance, and the like that are capable of wireless communication or network communication consistent with that which is disclosed herein.

A computing system or a computer may include a microprocessor that is electrically connected with a bus, a user interface, and a memory controller. It may further include a flash memory device. The flash memory device may store N-bit data via the memory controller. The N-bit data is processed or will be processed by the microprocessor and N may be 1 or an integer greater than 1. Where the computing system or computer is a mobile apparatus, a battery may be additionally provided to supply operation voltage of the computing system or computer. It will be apparent to those of ordinary skill in the art that the computing system or computer may further include an application chipset, a camera image processor (CIS), a mobile Dynamic Random Access Memory (DRAM), and the like. The memory controller and the flash memory device may constitute a solid state drive/disk (SSD) that uses a non-volatile memory to store data.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components. Accordingly, other implementations are within the scope of the following claims.

## Claims

1. A processor comprising:
a processing core unit configured to process data in a first operation mode and a second operation mode;
a storage unit comprising a plurality of storage spaces each having a plurality of storage lines; and
an output interface unit configured to select one of the plurality of storage spaces and output first data corresponding to a storage block on a storage line of the selected storage space if the processing core unit is in the first operation mode, and configured to select at least two of the plurality of storage spaces and output second data that is obtained by combining a plurality of blocks located on the same storage line of the selected storage spaces if the processing core unit is in the second operation mode.

2. The processor of claim 1, wherein the processing core unit is formed using a reconfigurable array and operates in a very long instruction word, VLIW, architecture in the first mode, and/or wherein the output interface unit outputs a VLIW instruction to be processed using the VLIW architecture, as the first data.

3. The processor of claim 1 or 2, wherein the processing core unit is formed using a reconfigurable array and operates in a coarse-grained array, CGA, architecture in the second mode, and/or wherein the output interface unit outputs a CGA instruction to be processed using the CGA architecture as the second data and configuration information that is used to define a configuration of the CGA architecture.

4. The processor of any one of claims 1 to 3, wherein the output interface unit comprises:
a mode determination unit configured to determine whether the processing core unit is in the first mode or the second mode;
a first output interface unit configured to output the first data if the processing core unit is in the first mode; and
a second output interface unit configured to output the second data if the processing core unit is in the second mode.

5. An apparatus for memory management, the apparatus comprising:
a storage unit comprising a plurality of storage spaces having a plurality of storage lines; and
an output interface unit configured to select one of the plurality of storage spaces during a first mode and output first data corresponding to a storage line of the selected storage space, and to select at least two of the plurality of storage spaces during a second mode and output second data obtained by combining a plurality of pieces of data each corresponding to the same storage line of the selected storage spaces.

6. The apparatus of claim 5, wherein the output interface unit comprises:
a mode determination unit configured to determine whether a processing core unit is in the first mode or the second mode;
a first output interface unit configured to output the first data if the processing core unit is in the first mode; and
a second output interface unit configured to output the second data if the processing core unit is in the second mode.

7. A method for memory management capable of providing a processing core having a first mode and a second mode with data of a storage unit including a plurality of storage spaces having a plurality of storage lines, the method comprising:
determining whether the processing core is in the first mode or the second mode;
selecting one of the plurality of storage spaces, if the processing core is in the first mode, and outputting first data corresponding to a storage line of the selected storage space; and
selecting at least two of the plurality of storage spaces, if the processing core is in the second mode, and outputting second data obtained by combining a plurality of pieces of data each corresponding to the same storage line of the selected storage spaces.

8. The method of claim 7, wherein the first mode is a very long instruction word, VLIW, mode of the processing core, and the second mode is a coarse-grained array, CGA, mode of the processing core.

9. The method of claim 8, wherein the first data comprises a VLIW instruction to be processed during the VLIW mode, or wherein the second data comprises a CGA instruction to be processed during the CGA mode and CGA configuration information.

10. A processor for processing data in a very long instruction word, VLIW, mode and a coarse-grained array, CGA, mode, the processor comprising:
a processing core for processing data; and
a memory for storing the data and for continuously providing the data to the processing core regardless of whether the processing core is in VLIW mode or in CGA mode.

11. The processor of claim 10, wherein the memory operates in a first configuration while the processing core is in the VLIW mode and the memory operates in a second configuration while the processing core is in the CGA mode.

12. The processor of claim 11, wherein the first configuration is an n-way set associative cache memory to provide a VLIW instruction while the processing core is in the VLIW mode, or wherein the second configuration is a direct-mapped cached configuration memory to provide CGA configuration information while the processing core is in the CGA mode, or
wherein, while in the first configuration in the VLIW mode, the memory provides the processing core with first data, and while in the second configuration in the CGA mode, the memory provides the processing core with second data that is different from the first data.

13. The processor of claim 12, wherein the second data is larger in size than the first data.

14. The processor of any one of claims 10 to 13, wherein the memory comprises:
a storage unit that comprises a plurality of storage spaces, and each storage space is divided into a plurality of storage lines; and
an output interface unit that provides the processing core with different types of data and different amounts of data based on the mode of the processing core.

15. The processor of claim 14, wherein the storage unit comprises a plurality of storage banks, each comprising a plurality of indexes that are aligned with the indexes of the other storage banks,
in response to the processor being in the first mode, the output interface unit provides data from one storage bank corresponding to a received index, and
in response to the processor being in the second mode, the output interface unit provides data from each storage bank corresponding to the received index.
